(19) Europäisches Patentamt
European Patent Office
Office européen des brevets

(11) **EP 1 267 351 B1**

(12) **EUROPEAN PATENT SPECIFICATION**

(45) Date of publication and mention of the grant of the patent:
**30.05.2007 Bulletin 2007/22**

(51) Int Cl.:
**G11B 23/03** (2006.01)

(21) Application number: **02252207.2**

(22) Date of filing: **27.03.2002**

(54) **Disc cartridge**

Plattenkassette

Cassette à disque

(84) Designated Contracting States:
**DE FR GB NL**

(30) Priority: **14.06.2001 KR 2001033529**

(43) Date of publication of application:
**18.12.2002 Bulletin 2002/51**

(73) Proprietor: **SAMSUNG ELECTRONICS CO., LTD.**
**Suwon-City, Kyungki-do (KR)**

(72) Inventors:
 • **Bae, Byoung-young,**
 **Songtanjiyeo,**
 **Pyeongtaek-si,**
 **Gyeonggi-do (KR)**
 • **Hong, Soon-kyo,**
 **Seocho-gu,**
 **Seoul (KR)**
 • **Kim, Kwang**
 **Seoul (KR)**
 • **Kweon, Hae-sub,**
 **Paldal-gu,**
 **Suwon-si,**
 **Gyeonggi-do (KR)**

(74) Representative: **Robinson, Ian Michael et al**
**Appleyard Lees**
**15 Clare Road**
**Halifax HX1 2HY (GB)**

(56) References cited:
 **US-A- 4 802 049** **US-A- 5 499 233**

 • **PATENT ABSTRACTS OF JAPAN vol. 1995, no. 06, 31 July 1995 (1995-07-31) -& JP 07 073633 A (NEC GUMMA LTD), 17 March 1995 (1995-03-17)**

**Description**

The present invention relates to a disc cartridge, and more particularly, to a disc cartridge having a means for centering a disc accommodated in the disc cartridge not to be deviated much from the center of a case.

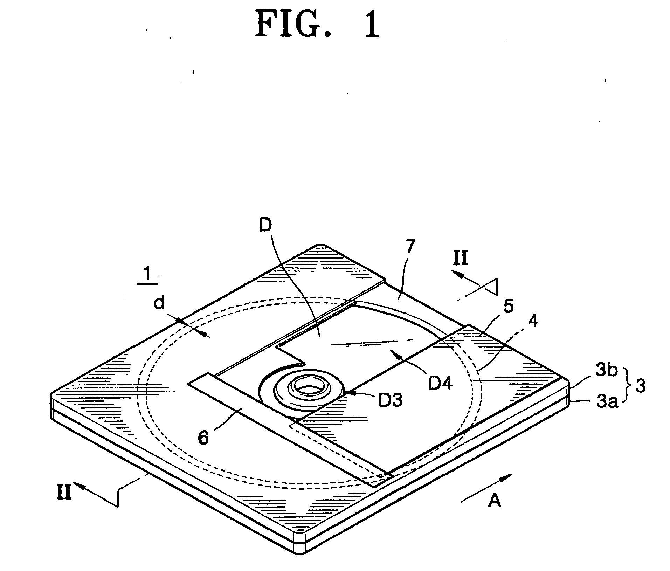

Figure 1 is a perspective view showing a cartridge loaded and unloaded in a slot-in manner, in which a shutter is open. Referring to the drawing, a disc cartridge 1 includes a case 3 forming the outer appearance. A circular inner wall 4 encompassing a space where a disc D is placed is formed in the case 3. The circular inner wall 4 is spaced a predetermined gap d apart from an edge of the disc D.

The case 3 includes an upper case 3a and a lower case 3b. In the lower case 3b of the case 3, a clamping area D3 where a clamp 8 (see Figure 2B) of the disc D and an open portion 7 corresponding to a read/write area D4 of the disc D are formed. The clamping area D3 and the open portion 7 are opened and shut by a shutter 5 guided by a shutter guide 6.

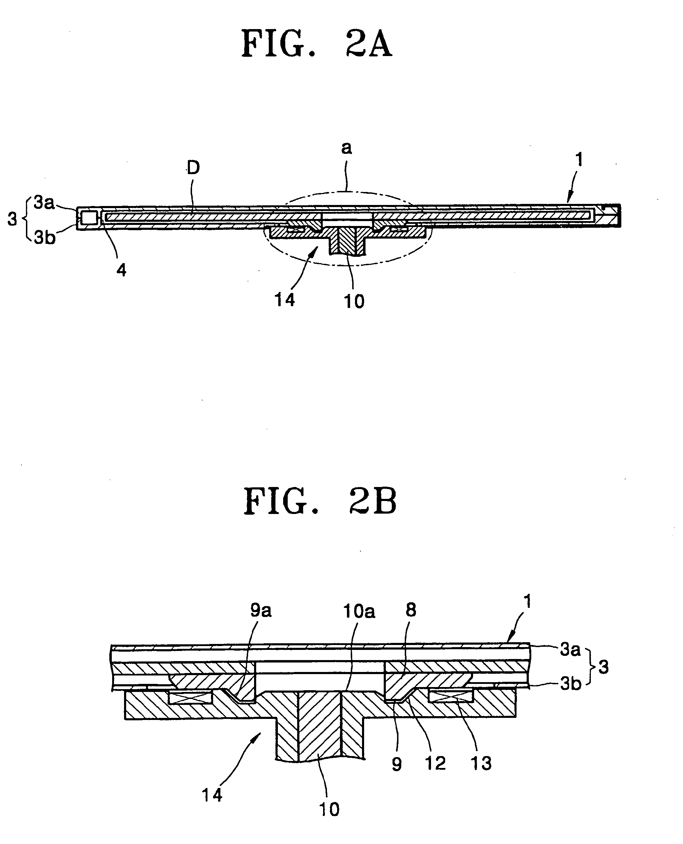

Figure 2A is a sectional view taken along line II-II' of Figure 1, in which the disc D is placed on a spindle hub 14. Figure 2B is an enlarged sectional view of an oval portion referenced by a in Figure 2A. Referring to the drawings, a disc clamp 8 which has a donut shape having a through hole at the center thereof is provided at the central portion of the disc D. A convex portion 9 where an inclined portion 9a is formed along the edge thereof is formed around a through hole at the bottom surface of the disc clamp 8.

The disc clamp 8 is placed on the spindle hub 14. The spindle hub 14 includes a guide portion 12 inclined corresponding to the convex portion 9 of the disc clamp 8 and a permanent magnet 13 for generating a clamping force with respect to the disc clamp 8. A spindle hub shaft 10 having a protruding portion 10a for centering the disc D with respect to the spindle hub 14 by entering the through hole of the disc clamp 8 of the disc D, is formed at the central portion of the spindle hub 14.

The loading and unloading operation of the disc cartridge 1 having the above structure with respect to a slot-in type disc drive (not shown) is described in detail with reference to the drawings as follows.

When the disc cartridge 1 is pushed into the disc drive, the shutter 5 is moved to one side along the shutter guide 6 to open the open portion 7 so that an optical pickup (not shown) can access the read/write area D4 of the disc D. Here, the case 3 is firmly held by a loading/unloading apparatus (not shown) of the disc drive. When the inclined portion 9a of the disc clamp 8 is positioned within a corresponding inclined area of the guide portion 12, the disc D slides along an inclined surface of the guide portion 12 so that the disc clamp 8 and the spindle hub 14 are engaged with each other. Thus, the disc clamp 8 is accommodated on the spindle hub shaft 10 and firmly held by being clamped by a magnetic force of the permanent magnet 13.

When the disc cartridge 1 is unloaded from the disc drive, the disc cartridge 1 is pressed in a direction indicated by an arrow A in Figure 1 in which the disc cartridge 1 enters in the disc drive. Here, only the case 3 moved in the direction A in a state in which the disc D is firmly held on the spindle hub 14. Next, an unloading system (not shown) of the disc drive pushes the cartridge 1 in a direction opposite to the direction A of Figure 1. Accordingly, a portion of the lower case 3b of the disc cartridge 1 to be adjacent to the disc clamp 8 is inserted between the disc clamp 8 and the spindle hub 14 to separate the disc clamp 8 from the guide portion 12. The separated disc cartridge 1 is unloaded from the disc drive and the shutter 5 is shut.

Thus, when the disc cartridge 1 having the above structure is unloaded, a gap in which the case 3 can move in a state in which the disc D is firmly held by a magnetic force on the spindle hub 14, is needed. That is, the gap between the outer circumference of the disc D and the inner wall 4 should be greater than a gap required for rotation of the disc D by a spindle motor (not shown). The disc D to be loaded moves within the above gap inside the case 3. When the disc D moved to one side in the disc cartridge 1 is to be accommodated on the spindle hub 14, since the inclined portion 9a of the disc clamp 8 must be designed to be positioned within an inclined area of the guide portion 12 corresponding to the inclined portion 9a, the width of the inclined portion 9a increases in proportional to the gap between the outer circumference of the disc D and the inner wall 4. Accordingly, the height of the convex portion 9 and the thickness of the disc cartridge 1 increase so that miniaturization of the disc cartridge 1 is prevented.

US-A-4,802,049 discloses a disc cartridge adapted to center a disc. The disc cartridge includes a casing which has a front end through which the disc cartridge is inserted into a disc player and a rear end which is opposite to the front end. At least the rear end is provided on an inner end surface thereof with an elastic means which acts to force the disc toward the front end to correctly position the disc in the casing when the disc cartridge is charged in a disc player. This document provides basis for the pre-characterising portion of independent claim 1 appended hereto.

US-A-5,499,233 discloses an optical carrier having two types of disc holder. A first type of disc holder comprises a leaf spring fixed at each end to a frame. When the carrier is inserted into a drive, the disc holders are pushed away from the disc, freeing the disc to rotate. When the carrier is ejected from the drive, the disc holders are allowed to engage the disc.

It is an aim of the present invention to provide a disc cartridge which helps to provide a gap between a disc and the case of the disc cartridge when the disc cartridge is unloaded from a slot-in type disc drive. Also, ideally it is desired to centre the disk within a predetermined range when the disc is loaded in the disc drive.

According to the present invention there is provided a disc cartridge for use in a disc drive including a disc which is an information recording medium and a case for accommodating the disc, the disc cartridge comprising an inner wall which defines a space for accommodating the disc and at least one centering spring preventing deviation of the disc, the disc cartridge being provided with a predetermined gap between the outer circumference of the disc and the inner wall; characterized by each centering spring being located in a recess formed in the inner wall; and the predetermined gap being the sum of a gap between the outer circumference of the disc and a contact portion of the centering spring to allow rotation of the disc and a gap between the contact portion and the inner wall to allow the case to move relative to the disc when the disc is firmly held on a spindle hub of the disk drive when the disc cartridge is unloaded from the a disc drive by being pushed in a direction in which the disk cartridge enters the disc drive; wherein the contact portion of the centering spring, disposed at a tail portion of the disc cartridge with respect to the direction in which the disc cartridge enters the disc drive, is adapted to be pressed by the disc when the disc cartridge is unloaded from the disc drive by being pushed in a direction in which the disk cartridge enters the disc drive, so that the disc is movable within the full range of the gap.

It is preferred in the present invention that four centering springs are provided.

It is preferred in the present invention that the centering spring comprises a contact portion disposed to face the disc and receiving a pressing force by being in contact with the disc, and an elastic portion extending from the contact portion and fixed by the case, and elastically deformed in a direction opposite to a direction in which pressure is applied to the contact portion by the disc.

It is preferred in the present invention that the contact portion protrudes from an inner wall for forming a space for accommodating the disc to be spaced a predetermined gap from the outer circumference of the disc, that the elastic portion is formed at both sides of the contact portion, or that the elastic portion is formed at one side of the contact portion.

It is preferred in the present invention that the centering spring is formed integrally with the case.

For a better understanding of the invention, and to show how embodiments of the same may be carried into effect, reference will now be made, by way of example, to the accompanying diagrammatic drawings in which:

Figure 1 is a perspective view showing a cartridge which is loaded and unloaded in a slot-in manner;

Figure 2A is a sectional view taken along line II-II' of Figure 1;

Figure 2B is an enlarged sectional view of a portion indicated by a in Figure 2A;

Figure 3 is a partially cut-away plan view showing a disc cartridge having a centering spring according to a preferred embodiment of the present invention;

Figure 4 is a perspective view showing the centering spring of Figure 3;

Figure 5 is a sectional view taken along line V-V' of Figure 3;

Figure 6 is a plan view for explaining the operation of the disc cartridge of Figure 3; and

Figure 7 is a plan view showing a disc cartridge having a centering spring according to another preferred embodiment of the present invention.

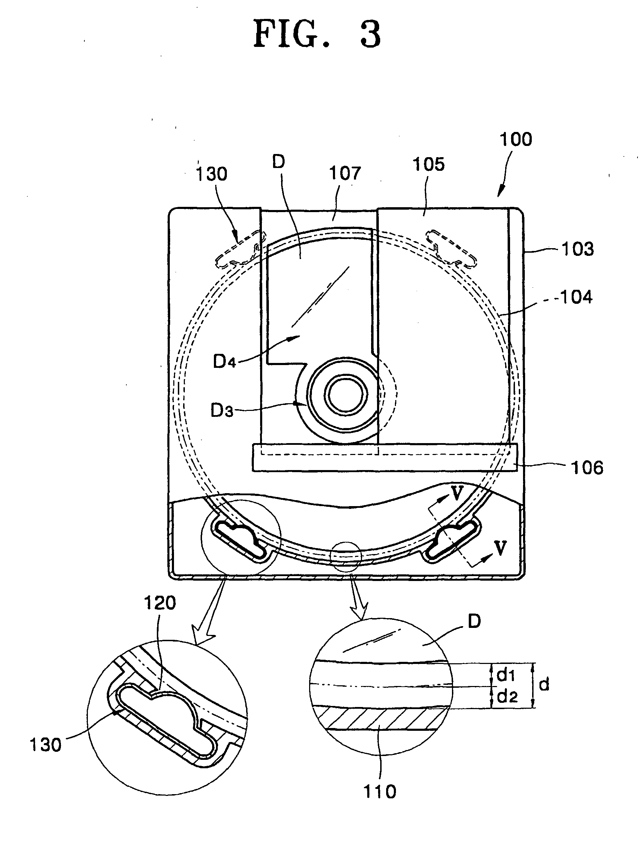

In Figures 3, 4, and 5, the same elements having the same functions as those in the above-described conventional invention are indicated by the same reference numerals and descriptions thereof will be omitted.

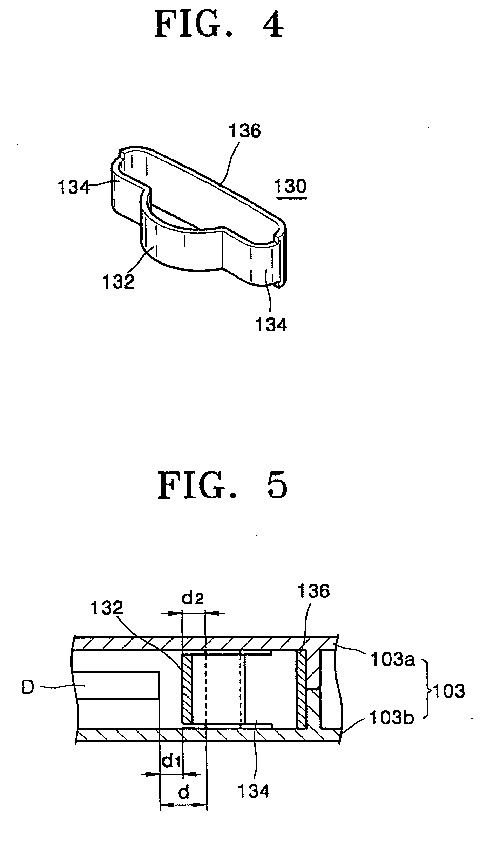

Referring to the drawings, a disc cartridge 100 includes a case 103 forming the outer appearance. An inner wall 104 which defines a space for accommodating the disc D, is formed in the case 103. The case 103 is divided into an upper case 103a and a lower case 103b, as shown in Figure 5. The clamping area D3 and an open portion 107 for accessing the read/write area D4 are formed on the lower case 103b. A shutter 105 for opening and shutting the open portion 107 and a shutter guide 106 for guiding the shutter 105 are provided.

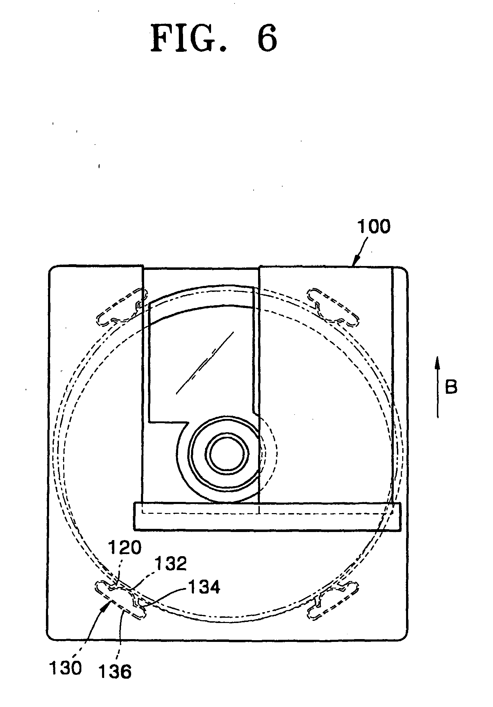

The inner wall 104 is formed with a predetermined gap d from the outer circumference of the disc D. A plurality of recesses 120 are formed in parts of the inner wall 104. A disc biasing element such as a center spring 130 which contacts the outer circumference of the disc D and restricts the position of the disc D, is provided in each of the recesses 120. The centering spring disc biasing element 120 includes a contact portion 132 contacting the disc D, a support portion 136 extending from the contact portion 132 and fixed by the inner wall 104 and the inside of the case 103, and an elastic portion 134 elastically deformed by a pressing force of the disc D in a direction of pressure (in the opposite direction to a direction indicated by an arrow B in Figure 6). The support portion 136 may be formed integrally with the inner wall 104 and the case 103.

The gap d between the disc D and the inner wall 104 is a sum of a gap $d_1$ between the outer circumference of the disc D and the contact portion 132 and a gap $d_2$ between the contact portion 132 and the inner wall 104, as shown in Equation 1.

$$[Equation\ 1]$$

$$d = d_1 + d_2$$

The gap d1 is allowance in gap needed when the disc D rotates within the cartridge 100. The gap d2 is a gap for securing the gap between the disc D and the inner wall 104 in the state in which the disc D is firmly held on the spindle hub 14 when the disc cartridge 100 is unloaded from the disc drive by being pushed in a direction indicated by an arrow B in Figure 6.

The loading and unloading operation of the disc cartridge 100 having the centering spring 130 of the above structure with respect to a slot-in type disc drive is described below in detail with reference to the attached drawings. Here, the spindle hub and the disc clamp in this preferred embodiment have the same structures and functions as those shown in Figures 2A and 2B while having different size thereof.

When the disc cartridge 100 is pushed into the disc drive, the shutter 105 moves to one side along the shutter guide 106 to open the open portion 107 so that an optical pickup (not shown) accesses the read/write area D4 of the disc D. Here, the cartridge case 103 is firmly held by a loading/unloading apparatus (not shown) of the disc drive. When the inclined portion 9a of the disc clamp 8 is positioned within a range of an inclination area of the corresponding guide portion 12, the disc D primarily centered within the gap d1 by the centering spring 130 slides along the inclination area of the guide portion 12. The disc clamp 8 and the spindle hub 14 are engaged and clamped with each other by a magnetic force of the magnet 13.

To unload the disc cartridge 100 from the disc drive, the disc cartridge 100 is pushed in the direction B in which the disc cartridge 100 enters the disc drive. The disc cartridge 100 in which the disc D is firmly held on the spindle hub 14 enters in the direction B. Accordingly, as shown in Figure 6, the contact portion 132 of the centering spring 130 disposed at a tail portion of the disc cartridge 100 with respect to the direction B is pressed by the disc D, so that the elastic portion 134 is elastically deformed by the gap d2 outward the recess 120. Thus, the allowance in distance between the outer circumference of the disc D and the inner wall 104 is secured as in the state in which the centering spring 130 does not exist. Next, an unloading system (not shown) of the disc drive pushes the disc cartridge 100 in a direction in which the disc cartridge 100 is unloaded, that is, in the direction opposite to the direction B of Figure 6. Accordingly, a portion of the lower case 103b of the disc cartridge 100 which is adjacent to the disc clamp 8 is inserted between the disc clamp 8 and the spindle hub 14 to separate the disc clamp 8 from the guide portion 12. The separated cartridge 100 is unloaded from the disc drive and subsequently the shutter 104 is shut. The elastically deformed elastic portion 134 restores the original state.

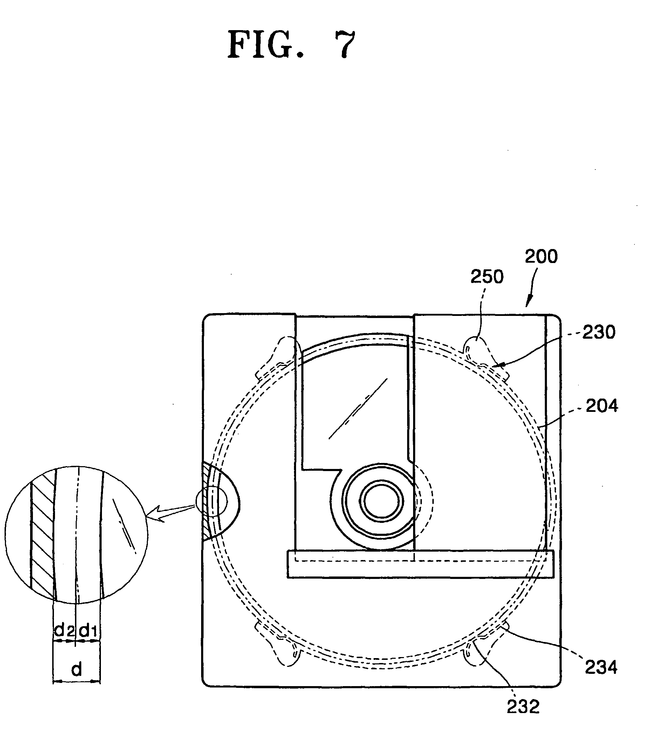

Figure 7 shows a disc cartridge 200 having a centering spring 230 according to another preferred embodiment of the present invention. A plurality of recesses 250 are formed in an inner wall 204 to be spaced a predetermined gap apart from the disc D accommodated in the disc cartridge 200. A cantilever centering spring 230 is provided in each of the recesses 250. The centering spring 230 includes a contact portion 232 contacting the disc D and an elastic portion 234 having one side portion supported at the recess 250 and elastically deformed. The centering spring 230 is preferably formed integrally with the inner wall 204 and the recess 250 by a one-time injection process. The gap d between the disc D and the inner wall 204 is a sum of the gap d1 between the outer circumference of the disc D and the contact portion 232 and a gap d2 between a surface of the contact portion 232 and the inner wall 104.

The disc cartridge 200 having the centering spring 230 of the above cantilever structure maintains a state in which the disc D loaded in the disc drive is primarily centered as in the previous preferred embodiment. When the disc cartridge 200 is unloaded from the disc drive, the pressure by the disc D is transferred to the contact portion 232 and accordingly the elastic portion 234 deformed inwardly the recess 250 provides allowance in gap to the opposite side.

As described above, in the disc cartridge according to the present invention, a gap in which a disc moves in the disc cartridge is restricted so that the length in which the disc clamp contacts the disc clamp guide can be reduced. Thus, the height of the disc clamp is reduced so that the thickness of the cartridge is reduced and miniaturization of the disc cartridge is possible.

While this invention has been particularly shown and described with reference to preferred embodiments thereof, it will be understood by those skilled in the art that various changes in form and details may be made therein without departing from the scope of the invention as defined by the appended claims.

**Claims**

1. A disc cartridge (100) for use in a disc drive including a disc (D) which is an information recording medium and a case (103) for accommodating the disc, the disc cartridge (100) comprising an inner wall (104) which defines a space for accommodating the disc (D) and at least one centering spring (130) preventing deviation of the disc (D), the disc cartridge (100) being provided with a predetermined gap (d) between the outer circumference of the disc (D) and the inner wall (104);

   **characterized by**:

   each centering spring being located in a recess (120) formed in the inner wall (104); and the predetermined gap (d) being the sum of a gap (d1) between the outer circumference of the disc (D) and a contact portion (132) of the centering spring (130) to allow rotation of the disc (D) and a gap (d2) between the contact portion (132) and the inner wall (104) to allow the case (103) to move relative to the disc (D) when the disc (D) is firmly held on a spindle hub (14) of the disk drive when the disc cartridge (100) is unloaded from the disc drive by being pushed in a direction in which the disk cartridge (100) enters the disc drive;

wherein the contact portion (132) of the centering spring (130), disposed at a tail portion of the disc cartridge (100) with respect to the direction in which the disc cartridge (100) enters the disc drive, is adapted to be pressed by the disc (D) when the disc cartridge (100) is unloaded from the disc drive by being pushed in a direction in which the disk cartridge (100) enters the disc drive, so that the disc (D) is movable within the full range of the gap (d).

2. The disc cartridge (100) as claimed in claim 1, wherein four centering springs (130) are provided.

3. The disc cartridge as claimed in claim 1 or 2, wherein the or each centering spring comprises:

the contact portion (132) disposed to face the disc and receiving a pressing force by being in contact with the disc; and

an elastic portion (134) extending from the contact portion and fixed by the case, and elastically deformed in a direction opposite to a direction in which pressure is applied to the contact portion by the disc.

4. The disc cartridge as claimed in claim 3, wherein the contact portion (132) protrudes from an inner wall (104) for forming a space for accommodating the disc to be spaced a predetermined gap from the outer circumference of the disc.

5. The disc cartridge as claimed in claim 3 or 4, wherein the elastic portion (134) is formed at both sides of the contact portion (132).

6. The disc cartridge as claimed in claim 3 or 4, wherein the elastic portion (134) is formed at one side of the contact portion (132).

7. The disc cartridge as claimed in any preceding claim, wherein the centering spring (130) is formed integrally with the case (103).

**Patentansprüche**

1. Plattenkassette (100) zur Verwendung in einem Plattenlaufwerk, mit einer Platte (D), die ein Informationsaufzeichnungsmedium ist, und einem Gehäuse (103) zur Aufnahme der Platte, wobei die Plattenkassette (100) eine Innenwand (104), die einen Raum zur Aufnahme der Platte (D) definiert, und wenigstens eine Zentrierfeder (130) umfasst, um eine Abweichung der Platte (D) zu verhindern, wobei die Plattenkassette (100) mit einem vorbestimmten Spalt (d) zwischen dem Außenumfang der Platte (D) und der Innenwand (104) versehen ist,

**dadurch gekennzeichnet,**

**dass** jede Zentrierfeder in einer Aussparung (120) angeordnet ist, die in der Innenwand (104) ausgebildet ist, und

**dass** der vorbestimmte Spalt (d) die Summe eines Spaltes (d1) zwischen dem Außenumfang und der Platte (D) und einem Kontaktbereich (132) der Zentrierfeder (130), um eine Drehung der Scheibe (D) zuzulassen, und eines Spaltes (d2) zwischen dem Kontaktbereich (132) und der Innenwand (104) ist, um es dem Gehäuse (103) zu gestatten, sich relativ zu der Platte (D) zu bewegen, und die Scheibe (D) fest an einer Spindelnabe (14) des Plattenlaufwerks gehalten ist, wenn die Plattenkassette (100) aus dem Plattenlaufwerk entnommen wird, indem sie in eine Richtung gedrückt wird, in der die Plattenkassette (100) in das Plattenlaufwerk eintritt, wobei der Kontaktbereich (132) der Zentrierfeder (130), der an einem Endbereich der Plattenkassette (100) in Bezug auf die Richtung angeordnet ist, in der die Plattenkassette (100) in das Plattenlaufwerk eintritt, dazu geeignet ist, durch die Scheibe (D) bei der Entnahme der Plattenkassette (100) aus dem Plattenlaufwerk gedrückt zu werden, indem er in eine Richtung gedrückt wird, in der die Plattenkassette (100) in das Plattenlaufwerk eintritt, so dass die Platte (D) innerhalb des gesamten Bereiches des Spaltes (d) bewegbar ist.

2. Plattenkassette (100) nach Anspruch 1, wobei vier Zentrierfedern (130) vorgesehen sind.

3. Plattenkassette (100) nach Anspruch 1 oder 2, wobei die oder jede Zentrierfeder aufweist:

den Kontaktbereich (132), der gegenüber der Platte angeordnet ist und eine Druckkraft aufnimmt, indem er in Kontakt mit der Platte ist; und

einen elastischen Bereich (134), der sich von dem Kontaktbereich erstreckt und durch das Gehäuse fixiert ist, und der elastisch in eine Richtung entgegengesetzt zu einer Richtung deformiert wird, in der ein Druck auf den Kontaktbereich durch die Platte ausgeübt wird.

4. Plattenkassette nach Anspruch 3, wobei der Kontaktbereich (132) von einer Innenwand (104) vorsteht, um einen Raum zur Aufnahme der Platte derart auszubilden, dass er um einen vorbestimmten Spalt von dem Außenumfang der Platte beabstandet ist.

**5.** Plattenkassette nach Anspruch 3 oder 4, wobei der elastische Bereich (134) an beiden Seiten des Kontaktbereiches (132) ausgebildet ist.

**6.** Plattenkassette nach Anspruch 3 oder 4, wobei der elastische Bereich (134) an einer Seite des Kontaktbereiches (132) ausgebildet ist.

**7.** Plattenkassette nach einem der vorhergehenden Ansprüche, wobei die Zentrierfeder (130) integral mit dem Gehäuse (103) ausgebildet ist.

**Revendications**

**1.** Cassette à disque (100) destinée à être utilisée dans un lecteur de disque comportant un disque (D) qui est un média d'enregistrement d'informations et un boîtier (103) pour loger le disque, la cassette à disque (100) comprenant une paroi interne (104) qui définit un espace pour loger le disque (D) et au moins un ressort de centrage (130) empêchant la déviation du disque (D), la cassette à disque (100) étant pourvue d'un espace (d) prédéterminé entre la circonférence externe du disque (D) et la paroi interne (104) ; **caractérisée en ce que** :

chaque ressort de centrage soit situé dans un évidement (120) formé dans la paroi interne (104) ; et
l'espace (d) prédéterminé soit la somme d'un espace (d1) entre la circonférence externe du disque (D) et une partie de contact (132) du ressort de centrage (130) pour permettre la rotation du disque (D) et d'un espace (d2) entre la partie de contact (132) et la paroi interne (104) pour permettre au boîtier (103) de se déplacer par rapport au disque (D) lorsque le disque (D) est fermement maintenu sur un axe (14) du lecteur de disque lorsque la cassette à disque (100) est déchargée du lecteur de disque en étant poussée dans une direction dans laquelle la cassette à disque (100) entre dans le lecteur de disque ; dans laquelle la partie de contact (132) du ressort de centrage (130), disposée au niveau d'une partie de talon de la cassette à disque (100) par rapport à la direction dans laquelle la cassette à disque (100) entre dans le lecteur de disque, est adaptée pour être comprimée par le disque (D) lorsque la cassette à disque (100) est déchargée du lecteur de disque en étant poussée dans une direction dans laquelle la cassette à disque (100) entre dans le lecteur de disque, de sorte que le disque (D) est mobile dans toute l'étendue de l'espace (d).

**2.** Cassette à disque (100) selon la revendication 1, dans laquelle quatre ressorts de centrage (130) sont pourvus.

**3.** Cassette à disque selon la revendication 1 ou 2, dans laquelle le ou chaque ressort de centrage comprend :

la partie de contact (132) disposée pour faire face au disque et recevant une force de pression en étant en contact avec le disque ; et
une partie élastique (134) s'étendant à partir de la partie de contact et fixée par le boîtier, et élastiquement déformée dans une direction opposée à une direction dans laquelle la pression est appliquée sur la partie de contact par le disque.

**4.** Cassette à disque selon la revendication 3, dans laquelle la partie de contact (132) fait saillie à partir d'une paroi interne (104) pour former un espace afin de loger le disque destiné à être espacé d'un espace prédéterminé par rapport à la circonférence externe du disque.

**5.** Cassette à disque selon la revendication 3 ou 4, dans laquelle la partie élastique (134) est formée des deux côtés de la partie de contact (132).

**6.** Cassette à disque selon la revendication 3 ou 4, dans laquelle la partie élastique (134) est formée d'un côté de la partie de contact (132).

**7.** Cassette à disque selon l'une quelconque des revendications précédentes, dans laquelle le ressort de centrage (130) est formé de manière solidaire avec le boîtier (103).

# FIG. 1

# FIG. 2A

# FIG. 2B

# FIG. 3

# FIG. 4

# FIG. 5

# FIG. 6

# FIG. 7